# EUROPEAN PATENT APPLICATION

(11) **EP 1 026 895 A1**
(43) Date of publication of application: **09.08.2000**
(21) Application number: 00101888.6
(22) Date of filing: 31.01.2000
(51) Int. Cl.: H04N 7/14

(54) **Tv cellular phone**

(30) Priority: 01.02.1999 JP 2393799
(71) Applicant: KABUSHIKI KAISHA TOSHIBA, Kawasaki-shi, Kanagawa-ken 210-8572 (JP)
(72) Inventor: Masafumi, Matsumura, c/o Intellectual Prop. Div., Tokyo 105-8001 (JP)
(74) Representative: Blumbach, Kramer & Partner GbR

(57) **Abstract**

A TV cellular phone system comprises a telephone set unit (10) and an expansion unit which is connected to the telephone set unit (10) as the need arises and is composed of an image output section (20), an image input section (30), a sound output section (40), and an sound input section (50). A CPU/multiplex/duplex section (12) in the telephone set unit (10) senses the TV telephone identifier from the TV telephone data received by a public network interface section (11), sets each section in the TV telephone mode, and duplexes the received TV telephone data into audio data and video data. The audio data and video data are outputted via a stream input/output (13) to an expansion unit. When the expansion input section inputs audio data and video data as TV telephone data via the stream input/output (13), the CPU/multiplex/duplex section (12) multiplexes the video data and audio data to create TV telephone data. The TV telephone data is then transmitted to the public network interface (11). This therefore realizes a cellular phone which can also be used in a TV cellular phone system without impairing the portability of the cellular phone when it is used as a mere telephone.

## Description

This invention relates to a cellular phone for transmitting and receiving various types of data, including audio data, via a radio channel, a TV-cellular-phone expansion unit for enabling the cellular phone to be used as a TV telephone, and a TV cellular phone system provided with the cellular phone and the TV-cellular-phone expansion unit.

With the recent improvements in radio communication technology and data processing technology, television (herein after referred to simply as TV) cellular phones are being developed. This type of TV cellular phone is provided with not only a radio communication function of transmitting and receiving various types of data, including audio data, via a radio channel but also a video camera for inputting images and a video monitor for outputting images, which enables users to enjoy conversation while exchanging images with each other easily.

Persons using TV cellular phones do not always use their TV cellular phones as TV telephones. Actually, at the places where they have gone or during the movement from one place to another, they use their TV cellular phones as mere telephones, not using the TV function. Namely, the video camera for inputting images or the video monitor for outputting images are not always required and need be carried with them less frequently.

Since the video camera and video monitor have been integrated into a conventional TV cellular phone, the telephone cannot be handled separately from the video camera and video monitor, impairing its portability significantly.

The object of the present invention is to provide a cellular phone capable of being used as a TV telephone without impairing its portability as the need arises, a TV-cellular-phone expansion unit for enabling the cellular phone to be used as a TV telephone, and a TV cellular phone system provided with the cellular phone and TV-cellular-phone expansion unit.

According to a first aspect of the present invention, there is provided a cellular phone for transmitting and receiving conversation telephone data and television telephone data which has audio data and video data via a radio channel, comprising:
means for receiving said conversation telephone data and said television telephone data via said radio channel;
means for setting a conversation mode when said receiving means receives said conversation telephone data, and setting a television telephone mode when said receiving means receives said television telephone data;
means for, in said conversation mode, decoding said conversation telephone data to produce sound and encoding sound to create conversation telephone data;
means for, in said television telephone mode, permitting said received television telephone data to be outputted outside said cellular phone and said television telephone data inputted from outside said cellular phone to be inputted; and
means for transmitting the television telephone data inputted to said permitting means via said radio channel.

According to a second aspect of the present invention, there is provided a television cellular phone expansion unit for using as a television telephone a cellular phone for transmitting and receiving conversation telephone data and television telephone data which has audio data and video data via a radio channel, said cellular phone including means for outputting television telephone data via a predetermined channel other than the radio channel and means for receiving television telephone data via the predetermined channel,
said television cellular phone expansion unit comprising:
means for receiving the television telephone data output from the outputting means of the cellular phone;
first conversation means for converting the video data and the audio data in the received television telephone data into an output video signal and an output audio signal;
means for inputting an input video signal and an input audio signal;
second conversion means for converting the input video signal and the audio signal into video data and audio data;
means for outputting the video data and the audio data converted by the second conversion means to the receiving means of the cellar phone.

According to a third aspect of the present invention, there is provided a television cellular phone system including a cellular phone for transmitting and receiving conversation telephone data and television telephone data which has audio data and video data, via a radio channel and a television cellular phone expansion unit for using the cellular phone as a television telephone, said television cellular phone system comprising:
means for receiving said conversation telephone data and said television telephone data via said radio channel;
means for setting a conversation mode when said receiving means receives said conversation telephone data, and setting a television telephone mode when said receiving means receives said television telephone data;
means for, in said conversation mode, decoding said conversation telephone data to produce sound and encoding sound to create conversation telephone data;
means for, in said television telephone mode, permitting said received television telephone data to be outputted to said expansion unit from said cellular phone and said television telephone data to be inputted from expansion unit to said cellular phone; and
means for transmitting the television telephone data inputted to said permitting means via said radio channel, and
said television telephone expansion unit comprising:
means for receiving the television telephone data output from said permitting means of the cellular phone;
first conversation means for converting the video data and the audio data in the received television telephone data into an output video signal and an output audio signal;
means for inputting an input video signal and an input audio signal;
second conversion means for converting the input video signal and the audio signal into video data and audio data;
means for outputting the video data and the audio data converted by the second conversion means to the receiving means of the cellar phone.

According to a fourth aspect of the present invention, there is provided a cellular phone system comprising:
a cellular phone unit capable of transmitting and receiving conversation telephone data and television telephone data including audio and video data via a public radio communication network; and
an expansion unit which is provided independently of said cellular phone and includes means for, when said cellular phone is in a television telephone mode for transmission and reception of television telephone data and the relation between said expansion unit and said cellular phone is kept in a transfer mode enabling data transfer, not only enabling television telephone audio and video data to be exchanged between said cellular phone and said expansion unit and converting the transferred audio and video data into audio and video signals but also creating audio and video data to be transferred to said cellular phone, wherein said cellular phone is kept capable of conversation using television telephone audio data, when said cellular phone is in the television telephone mode and kept in a non-transfer mode in which the data transfer between said cellular phone and said expansion unit is impossible.

According to a sixth aspect of the present invention, there is provided a cellular phone system comprising:
a cellular phone unit capable of transmitting and receiving conversation telephone data and television telephone data including audio and video data via a public radio communication network; and
an expansion unit which is provided independently of said cellular phone and includes means for, when said cellular phone is in a television telephone mode for transmission and reception of television telephone data and the relation between said expansion unit and said cellular phone is kept in a transfer mode enabling data transfer, not only enabling television telephone audio and video data to be exchanged between said cellular phone and said expansion unit and converting the transferred audio and video data into audio and video signals but also creating audio and video data to be transferred to said cellular phone, wherein said cellular phone is kept capable of conversation using the television telephone audio data transferred from said expansion unit, when said cellular phone is in the television telephone mode and kept in the transfer mode.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a schematic configuration of a TV cellular phone system according to a first embodiment of the present invention;
FIG. 2 is a flowchart to help explain the operation procedure for the telephone set unit in the TV cellular phone system of FIG. 1;
FIG. 3 is a flowchart to help explain the operation procedure for the expansion unit in the TV cellular phone system of FIG. 1;
FIG. 4 is a block diagram showing a schematic configuration of a TV cellular phone system according to a second embodiment of the present invention;
FIG. 5 is a flowchart to help explain the operation procedure for the telephone set unit in the TV cellular phone system of FIG. 4;
FIG. 6 is a flowchart to help explain the operation procedure for the expansion unit in the TV cellular phone system of FIG. 4;
FIG. 7 is a block diagram showing a schematic configuration of a TV cellular phone system according to a third embodiment of the present invention;
FIG. 8 is a flowchart to help explain the operation procedure for the telephone set unit in the TV cellular phone system of FIG. 7;
FIG. 9 is a flowchart to help explain the operation procedure for the expansion unit in the TV cellular phone system of FIG. 7;
FIG. 10 is a block diagram showing a schematic configuration of a TV cellular phone system according to a fourth embodiment of the present invention;
FIG. 11 is a flowchart to help explain the operation procedure for the telephone set unit in the TV cellular phone system of FIG. 10; and
FIG. 12 is a flowchart to help explain the operation procedure for the expansion unit in the TV cellular phone system of FIG. 10.

Hereinafter, referring to the accompanying drawings, embodiments of a TV cellular phone system according to the present invention will be explained. In the embodiments below, the parts marked with the same reference symbols indicate the same parts and explanation of them may be simplified. For detailed explanation of those simplified, refer to the relevant descriptions in the specification.

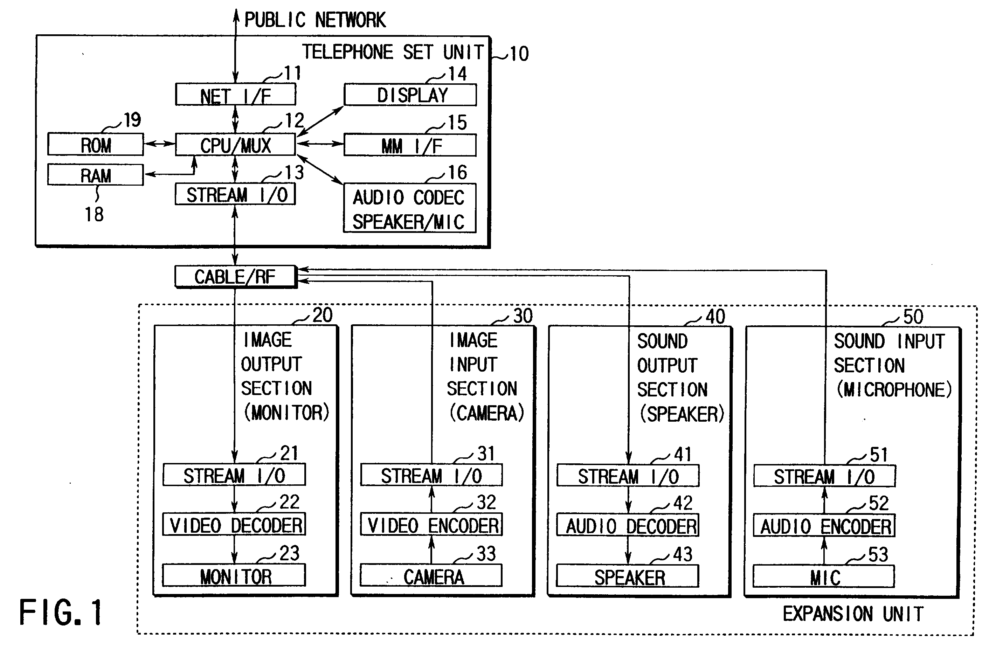

A TV cellular phone system according to a first embodiment of the present invention will be explained by reference to FIGS. 1 to 3.

FIG. 1 is a block diagram showing a schematic configuration of a TV cellular phone system according to a first embodiment of the present invention. The TV cellular phone system comprises a telephone set unit 10 serving as a cellular phone and an expansion unit which is provided independently of the cellular phone, is connected to the telephone set unit 10 when the transfer of video data and/or audio data is needed and includes an image output section 20, an image input section 30, a sound output section 40, and a sound input section 50.

The telephone set unit 10 is provided with a network interface 11 including a radio circuit, such as an antenna, for connecting with a public network and a CPU/multiplex/duplex section 12 for transmitting and receiving audio data and/or video data via the network interface 11 according to the procedure stored in a ROM 19 and multiplexing these data or duplexing the received data into audio data and video data. At the start of reception in the TV telephone mode, an identifier for TV telephone included in the received data or signal is sensed by the CPU 12. The CPU 12 judges the TV telephone mode by comparing the identifier with the identifier data in the ROM 19, stores the result in a RAM 18, and executes reception control in the TV telephone mode. At the start of transmission in the TV telephone mode, the CPU 12 refers to the identifier data in the ROM 19 and adds the identifier for TV telephone to the data or signal to be transmitted, stores the TV telephone mode into the RAM 18, and executes transmission control in the TV telephone mode. In the general conversation mode, the CPU 12, which refers to the identifier data stored in the ROM 19, senses the identifier for normal telephone included in the received and transmitted data or signal, stores the result into the RAM 18, and executes transmission and reception control in the normal telephone mode. The telephone set unit 10 further includes a display section 14 for displaying telephone numbers and others, a man-machine interface section 15, such as a touchpad, an audio codec speaker/microphone 16 for encoding the audio signal from a microphone and decoding the audio data stream from the CPU/multiplex/duplex section 12, and a stream input/output 13 serving as a stream interface for enabling the transfer of audio data streams and video data streams by wire or radio between an expansion unit explained later and the CPU/multiplex/duplex section 12.

The expansion unit includes an image output section 20 that receives the video data streams and displays images, an image input section 30 that takes in images and outputs video data streams, a sound output section 40 that receives the audio data streams and reproduces sound or audio signals, and a sound input section 50 that takes in sound and outputs audio data streams. The image output section 20 includes a stream input/output 21 serving as a stream interface for loading the video data stream from the cellular phone 10 into the image output section 20, an image data decoding section 22 for decoding video data streams, and a video monitor 23 for displaying images on the basis of the decoded TV signals. The image input section 30 includes a stream input/output 31 serving as a stream interface for creating and outputting video data streams to the cellular phone 10, a video camera 33 for converting optical images into video signals, and an image data encoding section 32 for encoding the video signal from the video camera. The sound output section 40 includes a stream input/output 41 serving as a stream interface for loading the audio data stream from the cellular phone 10 into the audio output section 40, an audio data encoding section 42 for decoding audio data streams, and a speaker 43 for generating sound, being driven by the decoded sound signal. The sound input section 50 includes a stream interface section 51 for outputting audio data streams to the cellular phone 10, a microphone 53 for converting sound into a sound signal, and a data encoding section 52 for encoding the sound signal.

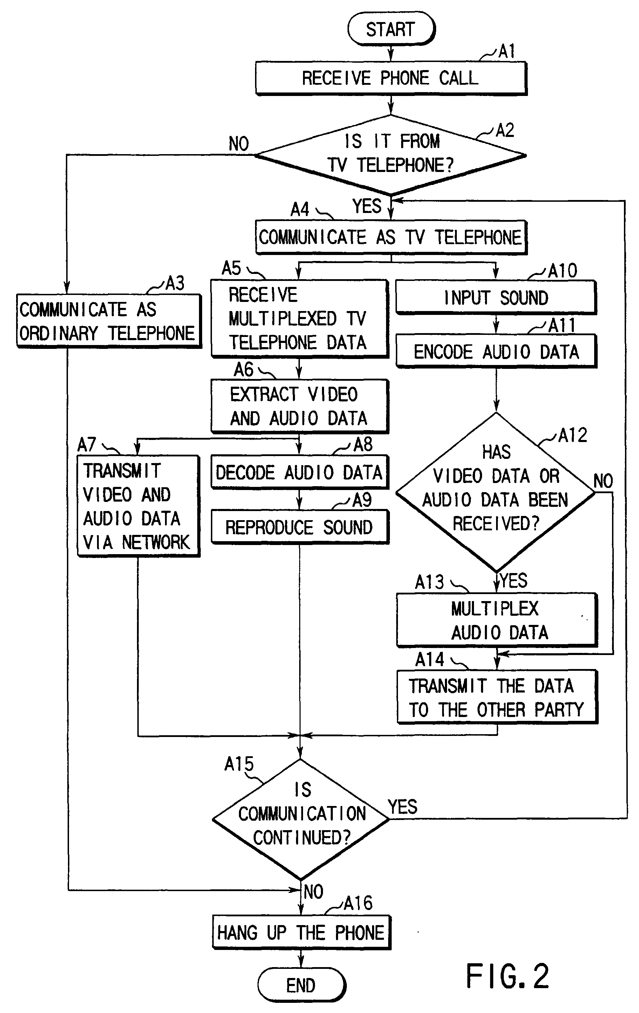

Next, the operation of the telephone set unit in the TV cellular phone system shown in FIG. 1 will be explained by reference to a flowchart shown in FIG. 2.

As shown in step A1, when the public network interface, or the network interface 11 has received a phone call, the CPU/multiplex/duplex section 12 refers to the data in the ROM 19 and judges whether the call is from a TV telephone or an ordinary telephone as shown in step A2. The judgment is made by comparing the identification code included in the control data exchanged with the public network for control with the identification data in the ROM 19.

If it has been judge that the call is not from a TV telephone, or when the result is NO at step A2, information that the call is in the general conversation mode is written into the RAM 18. The CPU/multiplex/duplex section 12 then starts control in the general conversation mode to execute communication by the action of an ordinary telephone set as shown in step A3.

On the other hand, if the result is YES at step A2, or it has been judged that the call is from a TV telephone, information that the call is from a TV telephone is written into the RAM 18. The CPU/multiplex/duplex section 12 then starts control to execute communication by the action of a TV telephone set as shown in step A4. In the TV telephone mode, processes in the following two systems are executed in parallel.

The CPU/multiplex/duplex section 12 causes the public network interface 11 to receive audio-and-video-data-multiplexed TV telephone data as shown in step A5 and duplexes the TV telephone data into audio data and video data as shown in step A6. Then, the CPU/multiplex/duplex section 12 not only outputs the extracted audio data and video data via the channel interface section 13 as shown in step A7, but also delivers the audio data to the audio codec speaker/microphone 16 acting as a sound controller, which decodes the audio data as shown in step A8 and reproduces sound as shown in step A9.

In parallel with that process, the CPU/multiplex/duplex section 12 causes the audio codec speaker/microphone 16 to enable the user to input sound as shown in step A10 and encode the inputted audio signal as shown in step A11. Then, the CPU/multiplex/duplex section 12 judges whether the channel interface section 13 has received the video data or audio data. If the result is YES as shown at step A12, or it has been judged that the audio data has been received, the audio data obtained from the sound controller 16 is multiplexed with the video data and audio data received by the channel interface section 13 to produce TV telephone data as shown in step A13. The TV telephone data is transmitted to the public network interface 11 as shown in step A14.

As shown NO in step A15, the CPU/multiplex/duplex section 12 repeats the above processes until it has received information that the phone has been hung up from the man-machine interface 15 or information that the public network interface 11 is going to complete the communication. After having hung up the phone, the CPU/multiplex/duplex section 12 ends the process.

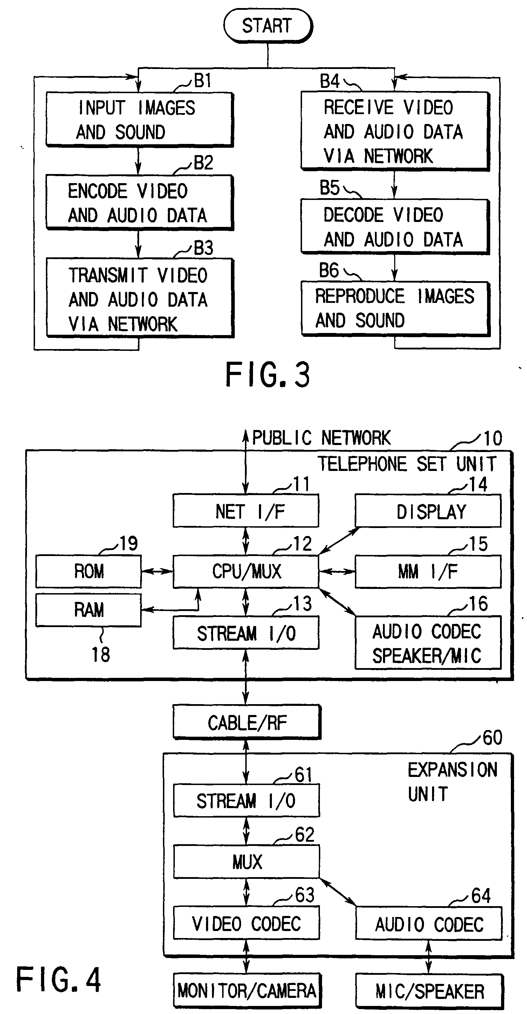

FIG. 3 is a flowchart to help explain the operation of the expansion unit in the TV cellular phone system.

As shown in step B1 of FIG. 3, the video camera 33 in the image input section 30 converts an image into a video signal and the microphone 53 in the sound input section 50 converts sound into an audio signal. Then, as shown in step B2, the image data encoding section 32 encodes the video signal into video data and the audio data encoding section 52 encodes the audio signal into audio data. Thereafter, the video data and audio data are outputted via the channel interface section 31 and channel interface section 51 to the telephone set unit 10.

In parallel with the processes from step B1 to step B3, the video data is inputted via the channel interface section 21 in the image output section 20 and the audio data is inputted via the channel interface section 41 in the sound output section 40 as shown in step B4. The inputted video data and audio data are decoded by the video data decoding section 22 and audio data decoding section 52 into a video signal and an audio signal as shown in step B5. Then, the video signal and audio signal drive the video monitor 23 and speaker 43, thereby displaying an image according to the video signal and reproducing sound according to the audio signal as shown in step B6.

As described above, with the TV cellular phone system of the first embodiment, the telephone set unit 10 is separable from the expansion unit, enabling only the telephone set unit 10 to be used as a mere cellular phone. This prevents the portability of the telephone set unit 10 from being impaired. In addition, when just being connected to the expansion unit as the need arises, the telephone set unit 10 can be used as a TV telephone.

Furthermore, even when the telephone set unit 10 in the TV cellular phone system of the first embodiment is a single unit, it can be used as a TV telephone with only sound available.

Moreover, because the telephone set unit 10 is not integrated into the expansion unit, a great load is prevented from being applied to the built-in battery of the telephone set unit and therefore its power consumption is suppressed.

A TV cellular phone system according to a second embodiment of the present invention will be explained by reference to FIGS. 4 to 6.

FIG. 4 is a block diagram showing a schematic configuration of a TV cellular phone system according to the embodiment. Like the system shown in FIG. 1, the TV cellular phone system comprises a telephone set unit 10 and an expansion unit 60 connected to the telephone set unit 10 as the need arises.

The telephone set unit 10 has the same configuration as that of the telephone set unit 10 of the first embodiment in FIG. 1. For explanation of it, refer to the relevant parts of the first embodiment. The expansion unit 60 includes a stream input/output 61 serving as a channel interface section, a multiplex/duplex section 62, a video codec section 63, and an audio codec section 64. The telephone set unit 10 is connected to the expansion unit 60 via each of the stream input/output 13, 61.

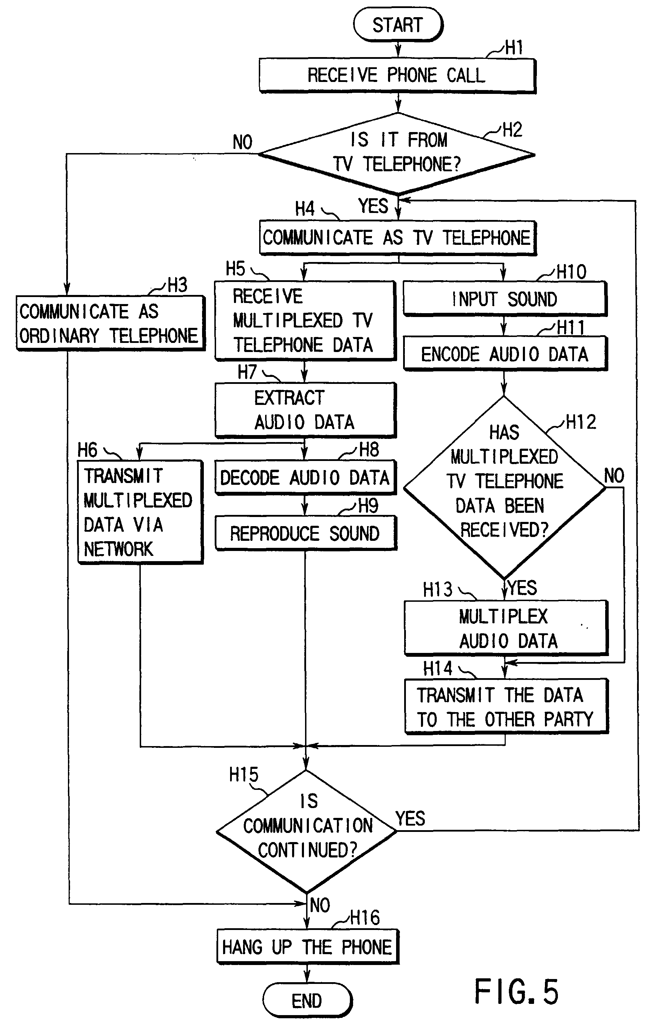

FIG. 5 is a flowchart to help explain the operation procedure for the telephone set unit 10 in the TV cellular phone system shown in FIG. 4.

As shown in step H1 in FIG. 5, when the public network interface 11 has received a phone call, the CPU/multiplex/duplex section 12 judges whether the call is from a TV telephone or not. The judgment is made by comparing the identification code included in the control data exchanged with the public network for call control with the identification code data stored in the ROM 19.

If it has been judge that the call is not from a TV telephone, or if the result is NO at step H2, the CPU/multiplex/duplex section 12 stores information that the call is in the general conversation mode into the RAM 18 and starts control to execute communication by the action of an ordinary telephone set as shown in step H3. On the other hand, if the result is YES at step H2, or it has been judged that the call is from a TV telephone, the CPU/multiplex/duplex section 12 stores information that the call is from a TV telephone into the RAM 18. Then, the CPU/multiplex/duplex section 12 starts control to execute communication by the action of a TV telephone set as shown in step H4. In the TV telephone mode, processes in the following two systems are executed in parallel.

The CPU/multiplex/duplex section 12 causes the public network interface 11 to receive audio-and-video-multiplex TV telephone data as shown in step H5. Then, the CPU/multiplex/duplex section 12 not only outputs the received TV telephone data to the stream input/output 13 acting as a channel interface as shown in step H6, but also duplexes the TV telephone data and extracts the audio data as shown in step H7. Then, as shown in steps H8 and H9, the CPU/multiplex/duplex section 12 causes the audio codec speaker/microphone 16 acting as a sound controller to decode the audio data and reproduce sound.

In parallel with that process, the CPU/multiplex/duplex section 12 causes the audio codec speaker/microphone 16 to enable the user to input sound and encode the inputted and converted audio signal into audio data as shown in steps H10 and H11. Then, the CPU/multiplex/duplex section 12 judges whether the channel interface section 13 has received the TV telephone data as shown in step H12. If the result is YES as shown in step H12, or it has been judged that the TV telephone data has been received, the audio data obtained from the audio codec speaker/microphone 16 is multiplexed with the TV telephone data received by the channel interface section 13 as shown in step H13. Then, as shown in step H14, the multiplexed TV telephone data is transmitted to the public network interface 11.

As shown NO in step H15, the CPU/multiplex/duplex section 12 repeats the above processes until it has received information that the phone has been hung up from the man-machine interface 15 or information that the public network interface 11 is going to complete the communication. After having hung up the phone as shown in step H16, the CPU/multiplex/duplex section 12 ends the process.

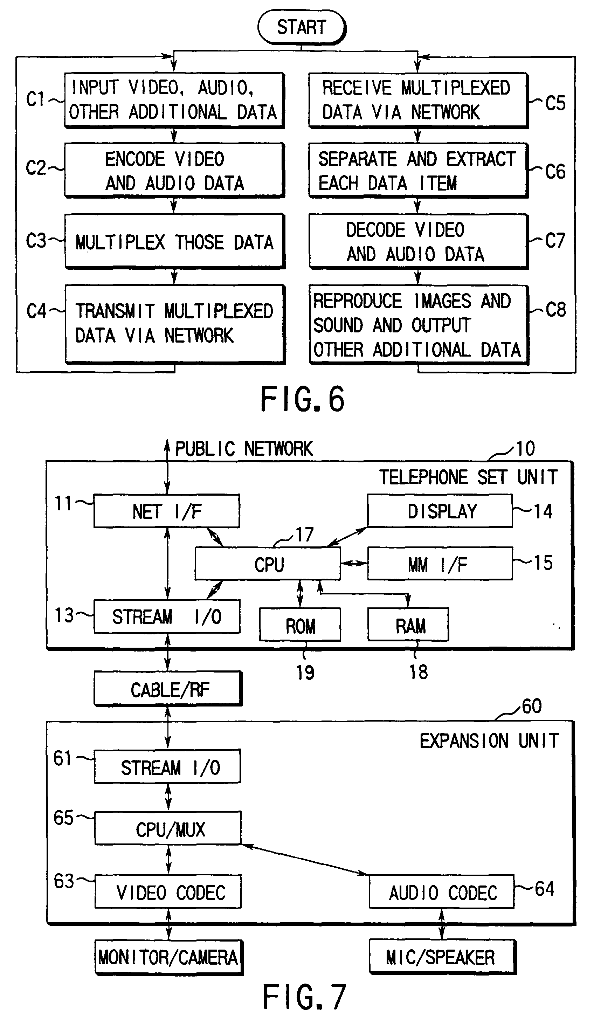

FIG. 6 is a flowchart to help explain the operation procedure for the expansion unit 60 in the TV cellular phone system shown in FIG. 4.

As shown in step C1 of FIG. 6, in the expansion unit 60, the externally connected video camera picks up an image and inputs the video signal to the image codec section 63 and the externally connected microphone picks up sound and input the audio signal to the audio codec section 64. Then, as shown in step C2, the inputted video signal and audio signals are encoded into video data and audio data, respectively. Then, the multiplex/duplex section 62 multiplexes the video data and the audio data as shown in step C3 to produce TV telephone data and causes the stream I/O 61 to output the TV telephone data as shown in step C4.

In parallel with the processes, the TV telephone data is inputted into the stream I/O 61 as shown in step C5. The multiplex/duplex section 62 duplexes the inputted TV telephone data into audio data and video data. Then, as shown in step C7, the video codec section 63 decodes the video data and the audio codec section 64 decodes the audio data. As shown in step C8, the decoded video signal and audio signal are outputted to the externally connected video monitor and speaker. The video monitor reproduces images from the video signal and the speaker reproduces sound from the audio signal.

As described above, with the TV cellular phone system of the second embodiment, not only can the telephone set unit 10 be used as a mere cellular phone, but the load on the processing of the telephone set unit can also be decreased by causing the expansion unit 60 to duplexe and multiplex the TV telephone data. In addition, the data transfer between the telephone set unit 10 and expansion unit 60 is achieved using the TV telephone data, which allows versatile data transfer and decreases the amount of data.

Furthermore, even when the telephone set unit 10 in the TV cellular phone system of the second embodiment is a single unit, it can be used as a TV telephone with only sound available.

Moreover, because the telephone set unit 10 is not integrated into the expansion unit, a great load is prevented from being applied to the built-in battery of the telephone set unit and therefore its power consumption is suppressed.

A TV cellular phone system according to a third embodiment of the present invention will be explained by reference to FIGS. 7 to 9.

FIG. 7 is a block diagram showing a schematic configuration of a TV cellular phone system according to the third embodiment. The configuration of the TV cellular phone system will be explained in comparison with the TV cellular phone system of the second embodiment in FIG. 4. In the system of FIG. 7, the telephone set unit 10 is provided with a CPU 17 in place of the CPU/multiplex and separation 12 and with no sound controller 16, and the expansion unit 60 is provided with a CPU/multiplex/duplex section 65 instead of the multiplex/duplex section 62.

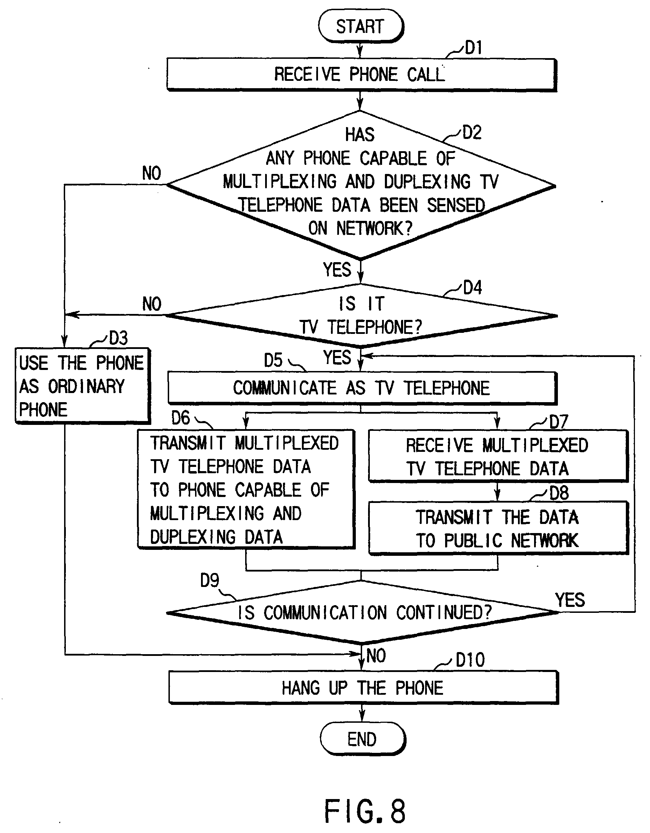

FIG. 8 is a flowchart to help explain the operation procedure for the telephone set unit 10 in the TV cellular phone system shown in FIG. 7.

As shown in step D1 in FIG. 8, when the public network interface 11 has received a phone call, the CPU 17 first judges whether the connection of the expansion unit 60 has been sensed as shown in step D2. The judgment is made by checking to see if the CPU has received notice of the existence of the expansion unit 60.

If it has been judge that the connection has not been sensed, or if the result is NO at step D2, the CPU 17 starts control to execute communication in the general conversation mode by the action of an ordinary telephone set as shown in step D3. On the other hand, if the result is YES at step D2, or it has been judged that the connection has been sensed, the CPU 17 further judges whether the call is from a TV telephone. The judgment is made by comparing the identification code included in the control data exchanged with the public network for call control with the identification code data stored in the ROM 19.

Even if the result is NO at step D4, or if it has been judged that the call is not from a TV telephone, the CPU 17 starts control to execute communication in the general conversation mode by the action of an ordinary telephone set as shown in step D3. On the other hand, if the result is YES at step D4, or it has been judged that the call is from a TV telephone, the CPU 17 starts control to execute communication in the TV telephone mode by the action of a TV telephone as shown in step D5. Specifically, in the TV telephone mode, processes in the following two systems are executed in parallel.

The CPU 17 causes the channel interface section 13 to output the TV telephone data obtained by multiplexing the audio data and video data received by the network interface 11 acting as the public interface section as shown in step D6. In parallel with this process, the CPU 17 causes the channel interface section 13 to receive the TV telephone data as shown in step D7 and transmit the received TV telephone data to the public interface section network 11 as shown in step D8.

As shown NO in step D9, the CPU 17 repeats the above processes until it has received information that the phone has been hung up from the man-machine interface 15 or information that the public network interface 11 is going to complete the communication. After having hung up the phone as shown in step D10, the CPU 17 ends the process.

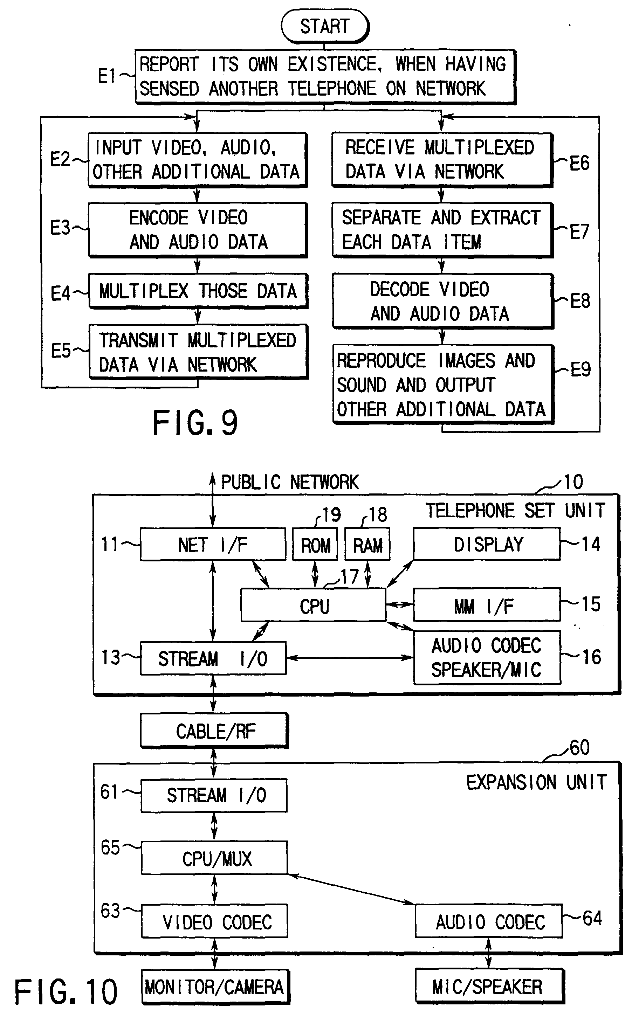

FIG. 9 is a flowchart to help explain the operation procedure for the expansion unit 60 in the TV cellular phone system shown in FIG. 7.

In the expansion unit 60, the CPU/multiplex/duplex section 65 informs the telephone set unit 10 of its existance as shown in step E1. Thereafter, the video signal corresponding to the image picked up by the video camera externally connected to the video codec section 63 is outputted as shown in step E2. Then, the video codec section 63 encodes the video signal into video data as shown in step E3. In addition, the audio signal corresponding to the sound picked up by the microphone externally connected to the audio codec section 64 is outputted as shown in step E2. Then, the video codec section 63 encodes the audio signal into audio data as shown in step E3. Then, the CPU/multiplex/duplex section 65 produces TV telephone data by multiplexing the encoded video data and audio data as shown in step E4. The stream I/O 61 outputs the produced TV telephone data as shown in step E5.

In parallel with this process, the stream I/O 61 inputs the TV telephone data as shown in step E6. The CPU/multiplex/duplex section 65 duplexes the TV telephone data into audio data and video data as shown in step E7. Then, as shown in step E8, the video codec section 63 decodes the video data and the audio codec section 64 decodes the audio data. As shown in step E9, the decoded video signal and audio signal are outputted to the externally connected video monitor and speaker.

As described above, because the telephone set unit 10 is not provided with the function of multiplexing and duplexing the TV telephone data in the TV cellular phone system of the third embodiment differently from that of the second embodiment, the number of parts constituting the telephone set unit is decreased, which improves its portability.

Since the telephone set unit 10 in the TV cellular phone system of the third embodiment executes communication as a TV telephone only when the connection of the expansion unit 60 has been sensed, it cannot be used in the TV telephone mode as a single TV cellular phone with only sound available differently from the first and second embodiments.

A TV cellular phone system according to a fourth embodiment of the present invention will be explained.

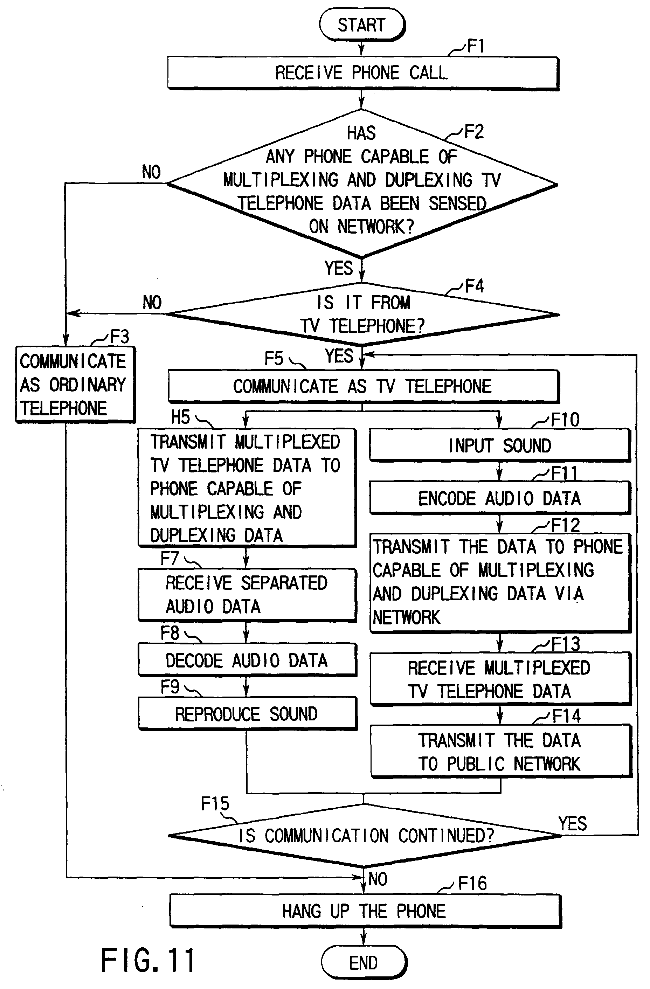

FIG. 10 is a block diagram showing a schematic configuration of a TV cellular phone system according to the fourth embodiment. In comparison with the TV cellular phone system of the third embodiment in FIG. 7, the TV cellular phone system of the fourth embodiment has an audio codec speaker/microphone 16 acting as a sound controller in the telephone set unit 10. An expansion unit 60 in the forth embodiment has almost the same configuration as that of the expansion unit 60 of the third embodiment.

FIG. 11 is a flowchart to help explain the operation procedure for the telephone set unit 10 in the TV cellular phone system shown in FIG. 10.

As shown in step F1 in FIG. 11, when the public network interface 11 has received a phone call, the CPU 17 first judges whether the expansion unit 60 has been connected to the telephone set unit 10 by wire or radio (i.e., RF) and the connection has been sensed as shown in step F2. The judgment is made by checking to see if the CPU has received notice of the existence of the expansion unit 60. The result of judgment is usually stored in the RAM 18. The state where the expansion unit 60 has been connected to the telephone set unit means that the expansion unit 60 is ready to transfer the TV telephone data at any time. It is not limited to the case where they are connected mechanically, and includes a case where they are separated spatially, but exchange data with each other by wireless means when they are operable.

If it has been judge that the state where they have not been connected to each other has been sensed, or if the result is NO at step F2, the CPU 17 starts control to execute communication in the general conversation mode by the action of an ordinary telephone set as shown in step F3. On the other hand, if the result is YES at step F2, or it has been judged that the state where they have been connected has been sensed, the CPU 17 further judges whether the data or signal of the call is from a TV telephone. The judgment is made by referring to the identification code included in the control data exchanged with the public network for call control.

Even if the result is NO at step F4, or if it has been judged that the call is not from a TV telephone, the CPU 17 starts control to execute communication in the general conversation mode by the action of an ordinary telephone set as shown in step F3. On the other hand, if the result is YES at step F4, or it has been judged that the call is from a TV telephone, the CPU 17 starts control to execute communication in the TV telephone mode by the action of a TV telephone as shown in step F5. Specifically, in the TV telephone mode, processes in the following two systems are executed in parallel.

The CPU 17 causes the channel interface section 13 to output the TV telephone data obtained by multiplexing the audio data and video data received by the public network interface 11 as shown in step F6. Then, the CPU 17 causes the stream input/output 13 acting as a channel interface to receive the audio data duplexed from the TV telephone data sent back from the expansion unit 60 as shown in step in F7, hands over the received audio data to the audio codec speaker/microphone 16 acting as a sound controller, and causes the audio codec speaker/microphone 16 to decode the audio data into an audio signal and reproduce sound from the audio signal as shown in steps F8 and F9.

In parallel with this process, the CPU 17 causes the audio codec speaker/microphone 16 to allow the user to input sound or encode the inputted audio signal to produce audio data as shown in steps F10 and F11. Then, the CPU 17 causes the stream input/output 13 to output the audio data supplied from the audio codec speaker/microphone 16 as shown in step F12. In addition, the CPU 17 delivers the multiplexed TV telephone data including the output of the audio codec speaker/microphone 16 to the stream input/output 13 as shown step F13. The TV telephone data is then transmitted via the public network interface 11 as shown in step F14.

As shown NO in step F15, the CPU 17 repeats the above processes until it has received information that the phone has been hung up from the man-machine interface 15 or information that the public network interface 11 is going to complete the communication. After having hung up the phone as shown in step F16, the CPU 17 ends the process.

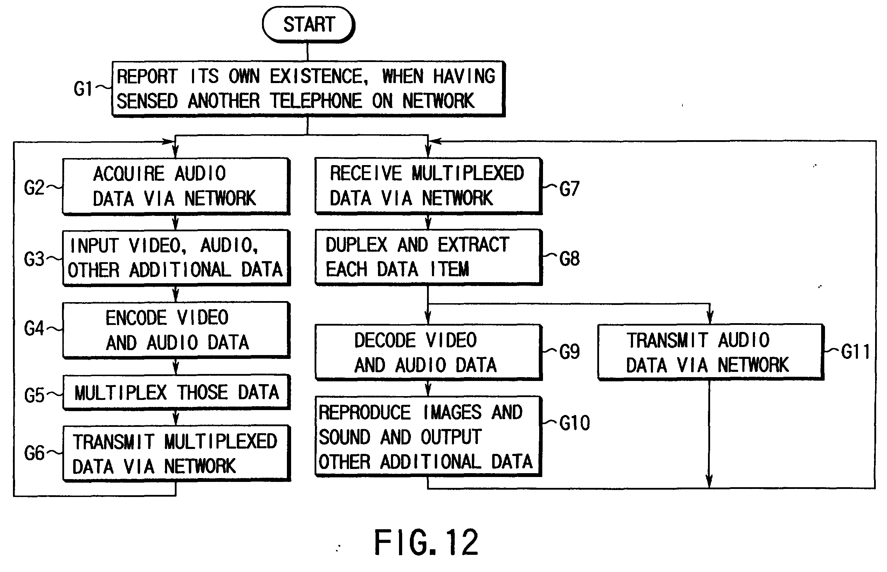

FIG. 12 is a flowchart to help explain the operation procedure for the expansion unit 60 in the TV cellular phone system shown in FIG. 10.

In the expansion unit 60, the CPU/multiplex/duplex section 65 informs the telephone set unit 10 of its existance as shown in step G1 in FIG. 12. Thereafter, the telephone set unit 10 inputs audio data to the stream input/output 61 as shown in step G2. In addition, the video camera externally connected to the video codec 63 picks up images, converts them into a video signal, and inputs the video signal to the video codec 63 as shown in step G3. The microphone externally connected to the audio codec 64 picks up sound, converts the sound into an audio signal, and inputs the audio signal to the audio codec 64 in step G3. The video codec 63 and audio codec 64 encode the inputted video signal and audio signal into video data and audio data, respectively, as shown in step G4. Then, the CPU/multiplex/duplex section 65 multiplexes these video data and audio data to produce TV telephone data as shown in step G5. As shown in step G6, the stream input/output 61 outputs the TV telephone data as shown in step G6.

In parallel with this process, the stream I/O 61 inputs the TV telephone data as shown in step G7. The CPU/multiplex/duplex section 65 duplexes the TV telephone data into audio data and video data as shown in step G8. Then, as shown in step G9, the video codec section 63 decodes the video data into a video signal and the audio codec section 64 decodes the audio data into an audio signal. As shown in step G10, the decoded video signal and audio signal are outputted to the externally connected video monitor and speaker, which then reproduce images and sound, respectively. At the same time, the audio data is outputted to the stream input/output 61 as shown in step G11. The outputted audio data is inputted via the stream input/output 13 to the audio codec speaker/microphone 16 of the telephone set unit 10. The audio codec speaker/microphone 16 reproduces sound.

As described above, although the telephone set unit 10 is not provided with the function of multiplexing and duplexing the TV telephone data in the TV cellular phone system of the fourth embodiment differently from that of the second embodiment, the audio data included in the TV telephone data transmitted from the other party can be reproduced at the telephone set unit 10 and the audio data obtained by the telephone set unit 10 can be included in the TV telephone data to be transmitted to the other party.

As described in detail, with the present invention, a telephone set, a video camera, a video monitor, and others are separated from each other in the configuration of a TV cellular phone, which not only prevents the portability of the cellular phone from being impaired but also enables the cellular phone to be used as a TV telephone by just connecting the cellular phone to an expansion unit including a video camera and a video monitor.

## Claims

1. A cellular phone for transmitting and receiving conversation telephone data and television telephone data which has audio data and video data, via a radio channel, characterized by comprising:
means (11) for receiving said conversation telephone data and said television telephone data via said radio channel;
means (12, 17) for setting a conversation mode when said receiving means (11) receives said conversation telephone data, and setting a television telephone mode when said receiving means (11) receives said television telephone data;
means (16, 17) for, in said conversation mode, decoding said conversation telephone data to produce sound and encoding sound to create conversation telephone data;
means (12, 13, 17) for, in said television telephone mode, permitting said received television telephone data to be outputted outside said cellular phone and said television telephone data inputted from outside said cellular phone to be inputted; and
means (11) for transmitting the television telephone data inputted to said permitting means via said radio channel.

2. The cellular phone according to claim 1, characterized in that said permitting means (12, 13, 17) includes
means (12) for, in said television telephone mode, duplexing said received television telephone data into audio data and video data,
means (12) for multiplexing said audio data and video data inputted to said permitting means to produce television telephone data, and
means (12) for permitting said duplexed audio data and video data to be outputted outside said cellular phone and audio data and video data to be inputted to said permitting means (12, 13, 17).

3. The cellular phone according to claim 2, characterized in that said permitting means (12, 13, 17) includes a connector for inputting and outputting audio data and video data.

4. The cellular phone according to claim 2 or 3, characterized in that said data multiplexing means includes multiplexer (12) for multiplexing the audio data created by said encoding and decoding means (12) and the audio data and video data inputted to said permitting means.

5. The cellular phone according to one of claims 2 to 4, characterized in that said encoding and decoding means (16, 17) includes means (16) for reproducing the audio data from the said data duplexing means.

6. The cellular phone according to one of claims 1 to 5, characterized in that said setting means (12, 17) includes means (12, 17) for sensing states where said permitting means (12, 13, 17) can transfer the television telephone data between said cellular phone and the outside and setting the television telephone mode.

7. A television cellular phone expansion unit for using as a television telephone a cellular phone (10) for transmitting and receiving conversation telephone data and television telephone data which has audio data and video data via a radio channel, said cellular phone (10) including means (13) for outputting television telephone data via a predetermined channel other than the radio channel and means (11) for receiving television telephone data via the predetermined channel,
said television cellular phone expansion unit characterized by comprising:
means (21, 31, 41, 51, 61) for receiving the television telephone data output from the outputting means (13) of the cellular phone;
first conversation means (22, 42) for converting the video data and the audio data in the received television telephone data into an output video signal and an output audio signal;
means (33, 53) for inputting an input video signal and an input audio signal;
second conversion means (32, 52, 63, 64) for converting the input video signal and the audio signal into video data and audio data;
means (31, 51, 61) for outputting the video data and the audio data converted by the second conversion means (32, 52, 63, 64) to the receiving means (21, 31, 41, 51, 61) of the cellar phone.

8. The television cellular phone expansion unit according to claim 7, characterized by further comprising:
means (23) for displaying an image corresponding to said converted output video signal;
means (43) for reproducing audio data corresponding to said converted output audio signal;
means (53) for generating an audio signal in response to sound; and
means (33) for picking up an image and generating a video signal.

9. The television cellular phone expansion unit according to claim 7 or 8, characterized by further comprising means (62, 65) for multiplexing said audio data and video data to be transferred and duplexing the television telephone data outputted from said outputting means (31, 51, 61) of said cellular phone (10) into audio data and video data.

10. The television cellular phone expansion unit according to one of claims 7 to 9, characterized in that said cellular phone (10) further comprising means (12) for multiplexing said audio data and video data transferred from said outputting means (31, 51, 61) of said expansion unit and duplexing the television telephone data received in said cellular phone via the radio cannel into audio data and video data.

11. A television cellular phone system including a cellular phone (10) for transmitting and receiving conversation telephone data and television telephone data which has audio data and video data via a radio channel and a television cellular phone expansion unit for using the cellular phone (10) as a television telephone, said television cellular phone system characterized by comprising:
means (11) for receiving said conversation telephone data and said television telephone data via said radio channel;
means (12, 17) for setting a conversation mode when said receiving means (11) receives said conversation telephone data, and setting a television telephone mode when said receiving means (11) receives said television telephone data;
means (12, 16) for, in said conversation mode, decoding said conversation telephone data to produce sound and encoding sound to create conversation telephone data;
means (12, 13, 17) for, in said television telephone mode, permitting said received television telephone data to be outputted to said expansion unit from said cellular phone and said television telephone data to be inputted from said expansion unit to said cellular phone; and
means (11) for transmitting the television telephone data inputted to said permitting means via said radio channel, and
said television telephone expansion unit comprising:
means (21, 31, 41, 51, 61) for receiving the television telephone data output from the permitting means (12, 13, 17) of the cellular phone (10);
first conversation means (22, 42) for converting the video data and the audio data in the received television telephone data into an output video signal and an output audio signal;
means (33, 53) for inputting an input video signal and an input audio signal;
second conversion means (32, 52, 63, 64) for converting the input video signal and the audio signal into video data and audio data;
means (31, 51, 61) for outputting the video data and the audio data converted by the second conversion means (32, 52, 63, 64) to the receiving means (21, 31, 41, 51, 61) of the cellar phone.

12. The television cellular phone system according to claim 11, characterized in that said permitting means (12, 13, 17) includes
means (12) for, in said television telephone mode, duplexing said received television telephone data into audio data and video data,
means (12) for multiplexing said audio data and video data inputted to said permitting means (12, 13, 17) to create television telephone data, and
means (13) for permitting not only said duplexed audio data and video data to be outputted outside said cellular phone but also audio data and video data to be inputted to said permitting means (12, 13, 17).

13. The television cellular phone system according to claim 12, characterized in that said data multiplexing means (12, 13, 17) of said cellular phone includes multiplexer (12) for multiplexing the audio data created by said encoding and decoding means (16, 17) and the audio data and video data inputted to said permitting means (12, 13, 17) of said cellular phone.

14. The television cellular phone system according to claim 12 or 13, characterized in that said encoding and decoding means (16, 17) of said cellular phone (10) includes means (16) for reproducing the audio data from said duplexing means (12) of said cellular phone (10).

15. The television cellular phone system according to one of claims 11 to 14, characterized in that said setting means (12, 17) includes means (12) for sensing states where said permitting means (12, 13, 17) can exchange television telephone data between said cellular phone (10) and the outside, and setting the television telephone mode.

16. The television cellular phone system according to one of claims 11 to 15, characterized by further comprising:
means (23) for displaying an image corresponding to said converted output video signal;
means (43) for reproducing audio data corresponding to said converted output audio signal;
means (53) for generating an audio signal in response to sound, and
means (33) for picking up an image and generating a video signal.

17. The television cellular phone system according to one of claims 11 to 16, characterized in that said cellular phone further comprises means (12) for multiplexing said audio data and video data transferred from said outputting means (31, 51) of said expansion unit and duplexing the television telephone data into audio and video data to be outputted from said permitting means (12, 13, 17) of said cellular phone to said expansion unit.

18. The television cellular phone system according to one of claims 11 to 17, characterized in that said television telephone expansion unit further comprises means (65) for multiplexing said audio data and video data transferred from said outputting means (63, 64) of said expansion unit and duplexing the television telephone data transferred from said permitting means (12, 13, 17) of said cellular phone into audio data and video data.

19. A cellular phone system characterized by comprising:
a cellular phone unit (10) capable of transmitting and receiving conversation telephone data and television telephone data including audio and video data via a public radio communication network; and
an expansion unit (60) which is provided independently of said cellular phone (10) and includes means (12) for, when said cellular phone is in a television telephone mode for transmission and reception of television telephone data and the relation between said expansion unit (60) and said cellular phone (10) is kept in a transfer mode enabling data transfer, not only enabling television telephone audio and video data to be exchanged between said cellular phone (10) and said expansion unit (60) and converting the transferred audio and video data into audio and video signals but also creating audio and video data to be transferred to said cellular phone (10), wherein said cellular phone (10) is kept capable of conversation using television telephone audio data, when said cellular phone (10) is in the television telephone mode and kept in a non-transfer mode in which the data transfer between said cellular phone (10) and said expansion unit (60) is impossible.

20. A cellular phone system characterized by comprising:
a cellular phone unit (10) capable of transmitting and receiving conversation telephone data and television telephone data including audio and video data via a public radio communication network; and
an expansion unit (60) which is provided independently of said cellular phone (10) and includes means (62, 65) for, when said cellular phone (10) is in a television telephone mode for transmission and reception of television telephone data and the relation between said expansion unit (60) and said cellular phone (10) is kept in a transfer mode enabling data transfer, not only enabling television telephone audio and video data to be exchanged between said cellular phone (10) and said expansion unit (60) and converting the transferred audio and video data into audio and video signals but also creating audio and video data to be transferred to said cellular phone, wherein said cellular phone (10) is kept capable of conversation using the television telephone audio data transferred from said expansion unit, when said cellular phone (10) is in the television telephone mode and kept in the transfer mode.
